# EUROPÄISCHE PATENTSCHRIFT

(11) **EP 2 146 813 B1**
(45) Veröffentlichungstag und Bekanntmachung des Hinweises auf die Patenterteilung: **21.12.2011**
(21) Anmeldenummer: 08718036.0
(22) Anmeldetag: 19.03.2008
(51) Int. Cl.: B23B 31/107, B23B 51/04

(54) **ADAPTER ZUM BETREIBEN EINER LOCHSÄGE AN EINER ANTRIEBSMASCHINE**
ADAPTER FOR OPERATING A HOLE SAW ON A PRIME MOVER
ADAPTATEUR POUR FAIRE FONCTIONNER UNE SCIE CLOCHE SUR UNE MACHINE D'ENTRAÎNEMENT

(30) Priorität: 11.05.2007 DE 102007022186
(43) Veröffentlichungstag der Anmeldung: 27.01.2010
(73) Patentinhaber: Robert Bosch GmbH, 70442 Stuttgart (DE)
(72) Erfinder: GOETZ, Renato, CH-5035 Unterentfelden (CH); GROLIMUND, Daniel, CH-4528 Zuchwil (CH)
(86) Internationale Anmeldenummer: PCT/EP2008/053315
(87) Internationale Veröffentlichungsnummer: WO 2008/138665

(56) Entgegenhaltungen:
- EP-A- 1 193 014
- WO-A-2005/000506
- WO-A-2005/002310
- US-A- 4 669 928
- US-A- 5 246 317

## Beschreibung

### Stand der Technik

Die Erfindung geht aus von einem Adapter zum Betreiben einer Lochsäge an einer Antriebsmaschine, insbesondere an einer Elektrohandbohrmaschine, nach dem Oberbegriff des Anspruchs 1.

Ein bekannter, Teil eines sog. Power-Change-Systems bildender Adapter zur Aufnahme einer Lochsäge (EP 1 193 014 A1 bzw. DE 601 04 177 T2) besitzt die Form eines hohlen Sechskantprismas, das auf seinem Umfang an dem einen Ende mit einem Gewindeabschnitt und nahe dem anderen Ende mit einer umlaufenden, konkaven Rastnut versehen ist. Der Gewindeabschnitt wird in ein zentrales Gewindeloch der Lochsäge eingeschraubt und der Adapter mit daran befestigter Lochsäge über sein Sechskantprisma in eine Antriebshülse mit einer als Sechskant ausgeführten, inneren Hülsenwand eingeschoben, bis eine in einer Radialbohrung in der Hülsenwand gehaltene Rastkugel in die Rastnut einfällt und den Adapter unverschieblich hält. Zur Ver- und Entriegelung des Adapters ist auf der Antriebshülse eine Verschiebehülse angeordnet, die manuell gegen die Rückstellkraft einer Druckfeder verschiebbar ist. In der Verriegelungsstellung schließt die Verschiebehülse die Radialbohrung außen ab, so dass die in die Rastnut des Adapters eingetauchte Rastkugel blockiert ist und radial nicht verschoben werden kann. In der Entriegelungsstellung, die die Verschiebehülse nach einem Verschiebeweg gegen die Rückstellkraft der Druckfeder einnimmt, ist die Radialbohrung kongruent mit einer Vertiefung in der Innenwand der Verschiebehülse, so dass die Rastkugel radial nach außen ausweichen kann, wenn beim Herausziehen des Adapters aus der Antriebshülse oder beim Hineinschieben des Adapters in die Antriebshülse eine der Nutflanken der Rastnut im Adapter auf die Rastkugel trifft. Die Antriebshülse weist einen Sechskant-Aufnahmeschaft auf, der in das Spannfutter einer Elektrohandbohrmaschine eingesetzt wird. Üblicherweise wird beim Bohren mit der Lochsäge noch ein sog. Pilotbohrer zur genauen Führung der Lochsäge verwendet. Der Pilotbohrer weist einen Sechskantschaft und eine umlaufende Rastnut im Sechskantschaft auf und ist in einem Bohrerverbindungsstück gehalten, und zwar über den Sechskantschaft drehfest und über eine im Bohrerverbindungsstück in einer Radialbohrung gehaltene Rastkugel, die in die Rastnut im Sechskantschaft des Pilotbohrers einfällt, axial unverschieblich. Das Bohrerverbindungsstück ist in dem Adapter aufgenommen und ragt mit einem sechskantigen Stegteil in das entsprechend geformte hohle Innere des Schaftes der Antriebshülse hinein.

Um bei großen Durchmessern der Lochsäge ein Ausreißen des Gewindes bei hoher Drehmomentübertragung zu verhindern, sind in der Lochsäge zwei diametral angeordnete Mitnahmelöcher vorgesehen und an der der Lochsäge zugekehrten Stirnseite der Antriebshülse zwei axial vorstehende Mitnahmezapfen angeordnet, die in die Mitnahmelöcher eintauchen. Die Drehmomentübertragung von der Elektrohandbohrmaschine über die Antriebshülse zur Lochsäge erfolgt damit über die Mitnahmezapfen und die Mitnahmelöcher und die Gewindeverbindung zwischen Lochsäge und Adapter ist entlastet. Die Verbindung von Lochsäge und Elektrohandbohrmaschine erfolgt in der Weise, dass der Adapter mit seinem Gewindeabschnitt in das Gewindeloch der Lochsäge fest eingeschraubt und dann der Adapter in die Antriebshülse eingeschoben wird, bis die Mitnahmezapfen an der Lochsäge anstoßen. Nach fluchtender Ausrichtung der Mitnahmezapfen zu den Mitnahmelöchern wird der Adapter vollständig unter Eindringen der Mitnahmezapfen in die Mitnahmelöcher in die Antriebshülse eingeschoben, wobei die Verschiebehülse soweit gegen die Kraft der Rückstellfeder zurückgeschoben gehalten werden muss, bis die Rastnut des Adapters unter die Rastkugel gelangt und die Rastkugel in die Rastnut eingefallen ist. Nach Loslassen der Verschiebehülse ist durch das von der Rückstellfeder ausgelöste Zurückschieben der Verschiebehülse der Adapter in der Antriebshülse axial unverschieblich verriegelt. Nach Einsetzen des Pilotbohrers wird die Antriebshülse mit ihrem Sechskantschaft in das Spannfutter der Elektrohandbohrmaschine eingesetzt.

Bei einem bekannten Adapter, der als sog. Standardausführung zum unmittelbaren Einsetzen in das Spannfutter einer Elektrohandwerkzeugmaschine konzipiert ist, sind Mitnahmezapfen und Gewindeabschnitt ebenfalls auf zwei getrennten Bauteilen angeordnet, die einzeln unter Aneinanderfügen an die Lochsäge angesetzt und dann miteinander lösbar verbunden werden. Das den Gewindeabschnitt tragende, hohle Bauteil, in das auch der Pilotbohrer eingesetzt ist, besitzt einen als Sechskant ausgebildeten Einspannschaft zum Einstecken in das Spannfutter der Elektrohandwerkzeugtnaschine, während das die Mitnahmezapfen tragende Bauteil auf dem Gewindeabschnitt und Einspannschaft tragenden Bauteil mittels einer Radialschraube festgesetzt ist.

Bei einem bekannten Adapter , gemäß dem Oberbegriff des Anprunchs 1 orber 8, zum Betreiben einer Lochsäge an einer Antriebsmaschine (US 4,669,928) ist die Lochsäge auf einem ersten Gewindeabschnitt eines Rohrglieds aufgeschraubt. Auf dem Rohrglied sitzt ein Ringsegment, das ein radial versetztes Mitnahmeloch aufweist. In das Mitnahmeloch taucht ein Mitnehmerzapfen ein, der von einem auf dem Rohrglied sitzenden Ringglied axial absteht. Hinter dem Ringglied weist das Rohrglied einen zweiten Gewindeabschnitt auf, auf dem eine Mutter aufgeschraubt ist, die Ringglied und Ringsegment an der auf dem ersten Gewindeabschnitt aufgeschraubten Lochsäge axial verspannt. Durch das Rohrglied ist ein sog. Pilotbohrer geschoben, der mit Querstiften in an der Stirnseite des ersten Gewindeabschnitts ausgebildeten Mulden einliegt und an seinem von der Lochsäge abgekehrten hinteren Ende einen Schaftabschnitt zum Einspannen in die Antriebsmaschine aufweist. Der Pilotbohrer ist axial zum Rohrglied verschiebbar, so dass ein von der Lochsäge ausgesägter Holzklotz mittels des Pilotbohrers aus der Lochsäge ausgeschoben und entfernt werden kann. Eine auf dem Schaftabschnitt angeordnete Feststellmuffe, die mittels einer Madenschraube auf dem Schaftabschnitt befestigbar ist, begrenzt die axiale Verschiebung des Pilotbohrers relativ zum Adapter. Zum Wechseln der Lochsäge muss der Adapter komplett demontiert werden.

Ein ebenfalls bekannter Adapter zum Betreiben einer Lochsäge an einer Antriebsmaschine (US 5,246,317) weist einen zylindrischen Schaft auf, der am Schaftende einen Gewindeabschnitt zum Aufschrauben der Lochsäge trägt. Auf dem Schaft sitzt eine Manschette, die an ihrem einen Ende mit einem Einspanndorn zum Einspannen in die Werkzeugaufnahme der Antriebsmaschine fest verbunden ist und an ihrem vom Einspanndorn abgekehrten anderen Ende eine Anlagefläche für die Lochsäge aufweist, von der zwei diametral angeordnete Mitnahmezapfen axial abstehen. Schaft und Manschette sind relativ zueinander drehbar und axial zueinander in zwei Rastpositionen verschiebbar. In der ersten Rastposition hat der am Schaftende angeordnete Gewindeabschnitt einen deutlichen Abstand von den freien Enden der Mitnahmezapfen, so dass die Lochsäge ohne Behinderung auf den Gewindeabschnitt aufgeschraubt werden kann. Hierzu besitzt der Schaft unmittelbar hinter dem Gewindeabschnitt zwei Abflachungen zum Aufstecken eines Maulschlüssels, um mit dessen Hilfe den Schaft beim Aufschrauben der Lochsäge am Mitdrehen zu hindern oder bei festgehaltener Lochsäge den Schaft in die Lochsäge einzudrehen. In der zweiten Rastposition sind die Mitnahmezapfen nach fluchtetem Ausrichten zu den Mitnahmelöchern in der Lochsäge durch Drehen der Manschette in die Mitnahmelöcher formschlüssig eingetaucht, und die Lochsäge ist an die Anlagefläche angelegt.

### Offenbarung der Erfindung

Der erfindungsgemäße Adapter zur Aufnahme einer Lochsäge mit den Merkmalen des Anspruchs 1 oder den Merkmalen des Anspruchs 8 hat den Vorteil, dass der Adapter einteilig ist und ein für das Einschrauben des Gewindedorns in das Gewindeloch erforderliches fluchtendes Ausrichten von Mitnahmezapfen am Adapter und Mitnahmelöchern in der Lochsäge sowie Einschieben der Mitnahmezapfen in die Mitnahmelöcher durch Drehen und durch Linearbewegung in einem Arbeitsschritt bewerkstelligt werden können, wobei eine spielfreie Befestigung zwischen Lochsäge und Adapter hergestellt wird. Anders als bei bekannten Adaptern sind Gewindeabschnitt und Mitnahmezapfen nicht auf voneinander separierbare Bauelemente verteilt, die getrennt mit der Lochsäge montiert und dann miteinander verbunden werden müssen, sondern in einer Baueinheit vereinigt und nicht voneinander trennbar, so dass keines der Bauelemente verlorengehen kann.

Der erfindungsgemäße Adapter kann bei entsprechender Gestaltung des Mitnahmeabschnitts sowohl zum unmittelbaren Einspannen in das Spannfutter einer Elektrohandbohrmaschine als auch zum mittelbaren Einspannen in das Spannfutter einer Elektrohandbohrmaschine unter Verwendung der eingangs beschriebenen, bekannten Antriebshülse des sog. Power-Change-Systems verwendet werden.

Durch die in den weiteren Ansprüchen aufgeführten Maßnahmen sind vorteilhafte Weiterbildungen und Verbesserungen des im Anspruch 1 bzw. Anspruch 8 angegebenen Adapters möglich.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer Lochsäge und eines Adapters zur Aufnahme der Lochsäge,
- Fig. 2: eine Explosionsdarstellung des Adapters in Fig. 1,
- Fig. 3: einen Längsschnitt eines Kupplungsteils eines sog. Power Change-Systems mit darin eingesetztem Adapter gemäß Fig. 1 und 2,
- Fig. 4: einen Längsschnitt eines Adapters gemäß einem zweiten Ausführungsbeispiel,
- Fig. 5: eine perspektivische Ansicht des Adapters in Richtung Pfeil V in Fig. 4.

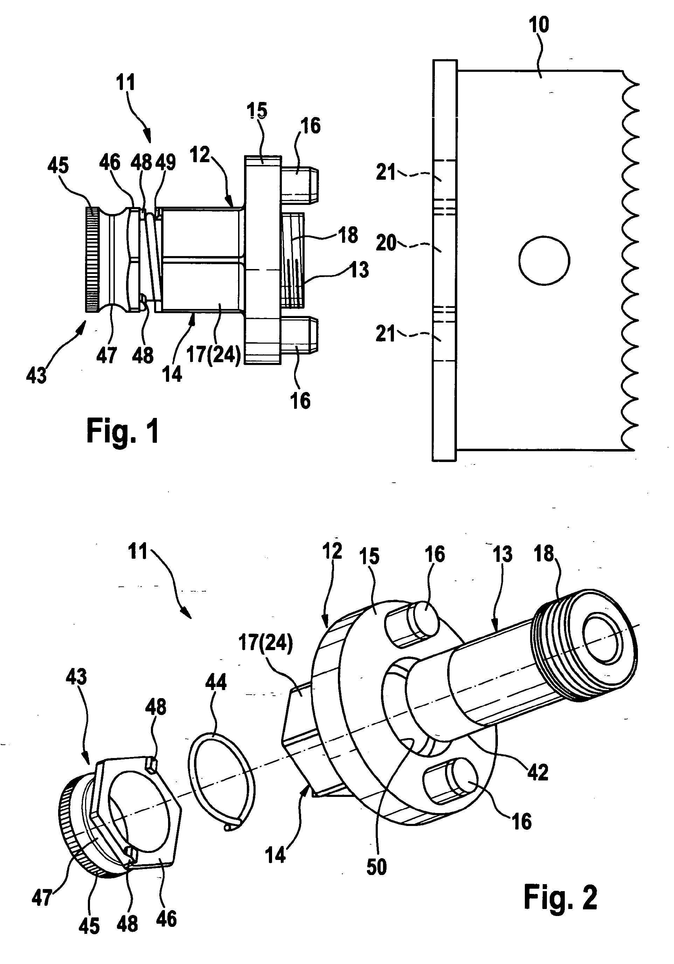

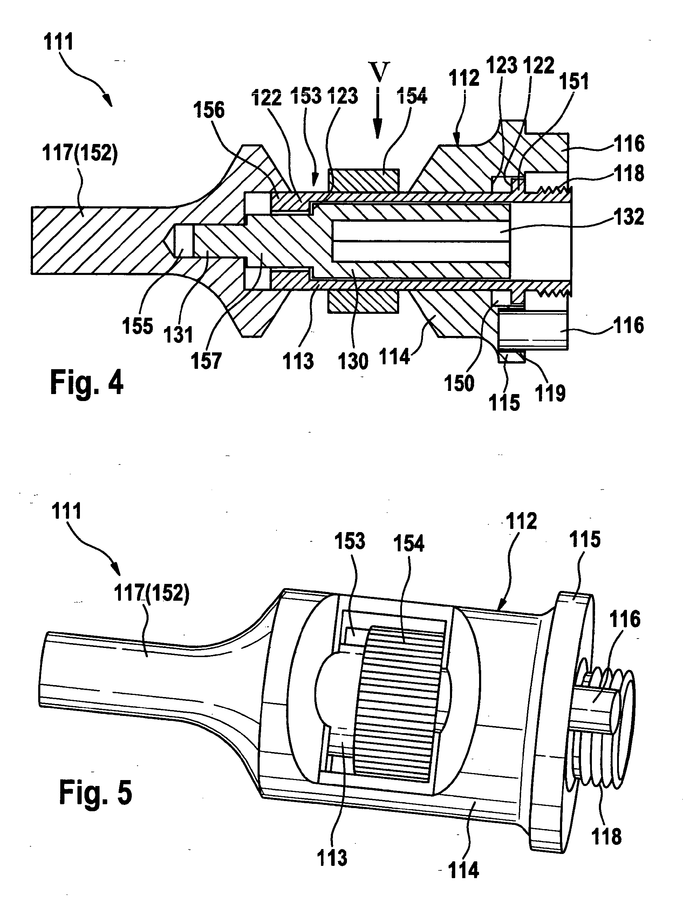

Der in Fig. 1 und 2 in Seitenansicht und in Explosionsdarstellung illustrierte Adapter 11 zur Aufnahme einer Lochsäge 10 ist so konzipiert, dass er Teil eines sog. Power Change-Systems ist, das in unterschiedlicher Konfiguration mit einer Elektrohandbohrmaschine betrieben werden kann, während der in Fig. 4 und 5 illustrierte Adapter 111 für das direkten Einsetzen in das Spannfutter einer Elektrohandbohrmaschine konzipiert ist.

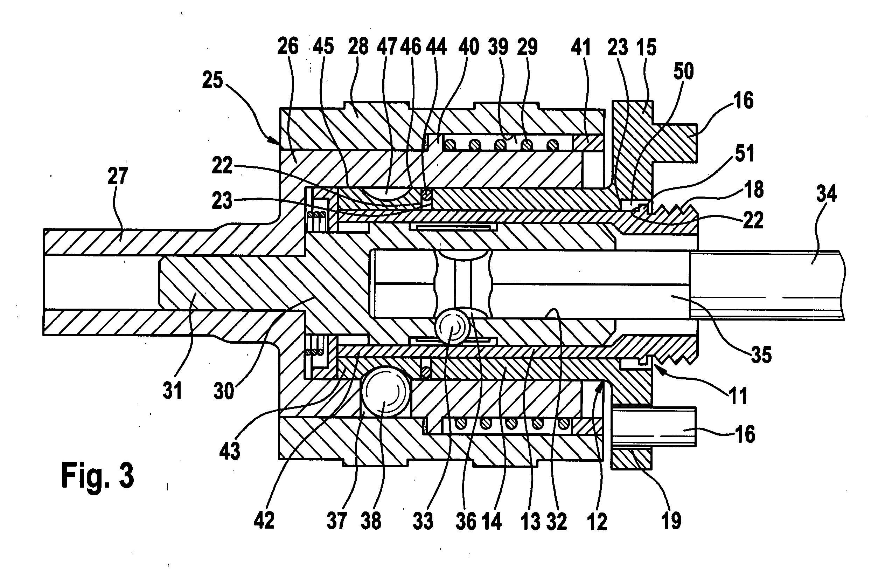

Beiden Adaptern 11 bzw. 111 ist gemeinsam, dass sie einen Mitnehmer 12 bzw. 112 und einen hohlzylindrischen Gewindedorn 13 bzw. 113 aufweisen, wobei der Gewindedorn 13 bzw. 113 in dem Mitnehmer 12 bzw. 112 drehbar und axial verschieblich einliegt. Der Mitnehmer 12 bzw. 112 weist einen Mitnehmerkörper 14 bzw. 114 und einen sich daran einstückig fortsetzenden Mitnehmerflansch 15 bzw. 115 auf, dessen vom Mitnehmerkörper 14 bzw. 114 abgekehrte Flanschfläche eine Anlagefläche für die Lochsäge 10 bildet. Am Mitnehmerflansch 15 bzw. 115 sind zwei Mitnahmezapfen 16 bzw. 116 diametral zur Mitnehmerachse angeordnet und stehen über die die Anlagefläche bildende freie Flanschfläche parallel zur Mitnehmerachse vor. Die Mitnahmezapfen 16 bzw. 116 sind entweder einstückig mit dem Mitnehmerflansch 15 bzw. 115 ausgebildet, wie dies im oberen Teil der Fig. 3 und 4 zu sehen ist, oder als separate Bauelemente in entsprechende Axialbohrungen 19 bzw. 119 eingesetzt und in diesen verpresst oder verstemmt, wie dies im unteren Teil der Fig. 3 und 4 illustriert ist. Der Mitnehmerkörper 14 bzw. 114 besitzt einen Mitnahmeabschnitt 17 bzw. 117, über den der Mitnehmer 12 bzw. 112 ein von der Elektrohandbohrmaschine abgeleitetes Drehmoment aufnimmt.

Der im Mitnehmer 12 bzw. 112 drehbar einliegende Gewindedorn 13 bzw. 113 ragt an der Flanschseite des Mitnehmers 12 bzw. 112 aus dem Mitnehmer 12 bzw. 112 heraus und ist hier im Endbereich mit einem Gewindeabschnitt 18 bzw. 118 versehen, der zum Einschrauben in ein in der Lochsäge 10 vorhandenes, zentrales Gewindeloch 20 dient. Im gleichen Radialabstand, den die Mitnahmezapfen 16 von der Mitnehmerkörperachse 14 aufweisen, sind in der Lochsäge 10 zwei diametrale Aufnahmelöcher 21 vorgesehen, in die die Mitnahmezapfen 16 bzw. 116 des Mitnehmers 12 bzw. 112 einzutauchen vermögen. Der Verschiebeweg des Gewindedorns 13 bzw. 113 ist durch zwei voneinander axial beabstandete Anschläge 22 bzw. 122 am Verschiebedorn 13 3 bzw. 113 und zwei mit diesen zusammenwirkende Gegenanschläge 23 bzw. 123 am Mitnehmer 12 bzw. 112 begrenzt. Dabei sind die Anschläge 22 bzw. 122 und Gegenanschläge 23 bzw. 123 so platziert, dass der Verschiebeweg des Gewindedorns 13 bzw. 113 im Mitnehmer 14 bzw. 114 so groß bemessen ist, dass das den Gewindeabschnitt 18 bzw, 118 8 tragende Ende des Gewindedorns 13 bzw. 113 hinter die freien Stirnenden der Mitnahmezapfen 16 bzw. 116 zurückgezogen werden kann, so dass die Mitnahmezapfen 16 bzw. 116 vor dem Einschrauben des Gewindeabschnitts 18 bzw. 118 in das Gewindeloch 20 der Lochsäge 10 in die Aufnahmelöcher 21 in der Lochsäge 10 eingesetzt werden können. Im Mitnehmerflansch 15 bzw. 115 ist eine zentrale Aussparung 50 bzw. 150 vorhanden, die in der als Anlagefläche für die Lochsäge 10 dienenden Flanschfläche mündet. Der Gewindedorn 13 bzw. 113 trägt am Ende seines Gewindeabschnitts 18 bzw. 118 einen umlaufenden Radialbund 51 bzw. 151, der in die Aussparung 50 bzw. 150 hineinragt. Dieser Radialbund 51 bzw. 151 bildet den einen Anschlag 22 bzw. 122 und der Grund der Aussparung 50 bzw. 150 bildet den mit diesem zusammenwirkenden einen Gegenanschlag 23 bzw. 123 zur Begrenzung des Verschiebewegs des Gewindedorns 13 bzw. 113 im Mitnehmer 12 bzw. 112.

Bei dem in Fig. 1 bis 3 dargestellten Adapter 11 ist der Mitnahmeabschnitt 17 als Außensechskant 24 zum formschlüssigen Einsetzen in ein auch als Basismechanismus bezeichnetes Kupplungsstück 25 eines Power Change-Systems ausgebildet. Das Kupplungsteil 25 ist bekannt und ausführlich in der eingangs dokumentierten EP 1 193 014 A1 beschrieben, so dass es hier nachfolgend nur kurz erläutert wird.

Das Kupplungsteil 25 weist eine Antriebshülse 26 mit einem Sechskantschaft 27 zum Einstecken⁻in das Spannfutter einer Elektrohandwerkzeugmaschine sowie eine auf der Antriebshülse 26 gegen die Kraft einer Druckfeder 29 verschiebbare Verschiebehülse 28 auf. Zum Kupplungsteil 25 gehört noch ein Bohrerverbindungsstück 30, das in den Adapter 11 eingesetzt ist und mit einem Sechskantschaft 31 in einen entsprechend sechskantig ausgebildeten Hohlraum im Sechskantschaft 27 der Antriebshülse 26 hineinragt. Das Bohrerverbindungsstück 30 weist eine zentrale Ausnehmung 32 mit Innenwand in Sechskantausfiihrung sowie eine radial verschiebbare Rastkugel 33 auf. In das Bohrerverbindungsstück-30 ist ein Pilotbohrer 34 zur Führung der Lochsäge 10 mit einem Sechskantschaft 35 eingesetzt und mittels der in eine Rastnut 36 im Sechskantschaft 35 einfallenden Rastkugel 33 axial unverschieblich verriegelt.

Die Innenwand der Antriebshülse 26 ist ebenfalls als Sechskant ausgeführt. So dass der Adapter 11 mit dem Außensechskant 24 auf dem Mitnehmer 12 in Drehrichtung formschlüssig in der Antriebshülse 26 gehalten ist. Zur axial unverschieblichen Halterung des Adapters 11 ist in einer Radialbohrung 37 der Antriebshülse 26 eine Rastkugel 38 radial verschieblich gehalten, die an der Innenwand der Antriebshülse 38 radial vorsteht und von der Verschiebehülse 28 gegen Austreten aus der Radialbohrung 37 gesichert ist. In die Innenwand der Verschiebehülse 28 ist eine Ausnehmung 39 eingestochen, die sich bis zum Ende der Verschiebehülse 28 erstreckt. In die Ausnehmung 39 ragt ein an der Antriebshülse 26 ausgebildeter Radialflansch 40 hinein. In der Ausnehmung 39 liegt die Druckfeder 29 ein, die sich einerseits am Radialflansch 40 und andererseits an einem endseitig in die Ausnehmung 39 eingesetzten und an der Verschiebehülse 28 befestigten Ring 41 abstützt. Wird die Verschiebehülse 28 unter Zusammenpressen der Druckfeder 29 in Fig. 3 nach links verschoben, so gelangt ein Teil der Ausnehmung 39 über die Rastkugel 38,und letztere kann sich radial nach außen in die Ausnehmung 39 hinein bewegen, so dass sie hinter die Innenwand der Antriebshülse 26 zurücktreten kann.

Wie in Fig. 1 bis 3 zu sehen ist, steht der im Mitnehmer 12 aufgenommene Gewindedorn 13 mit einem vom Gewindeabschnitt 18 abgekehrten Endabschnitt 42 über den Mitnehmerkörper 14 vor. Auf diesen Endabschnitt 42 ist einerseits ein Haltering 43 befestigt, z.B. aufgepresst oder aufgeschrumpft, und ein als Sprengring ausgebildetes Federelement 44 mit axial wirkender Federkraft aufgesetzt, das sich einerseits an der Stirnfläche des Mitnehmerkörpers 14 und andererseits an dem Haltering 43 abstützt. Der Haltering 43 besitzt an seinem freien Ende einen Ringabschnitt 45 mit einer Rändelung und an seiner dem Mitnehmerkörper 14 zugekehrten Ende einen als Sechskant ausgebildeten Ringabschnitt 46, der an den Außensechskant 24 des Mitnehmerkörpers 14 angepasst ist. Zwischen den beiden Ringabschnitten 45, 46 ist eine umlaufende, konkave Rastnut 47 vorgesehen, die in Verbindung mit der Rastkugel 38 der Antriebshülse 26 des Kupplungsteils 25 zur Verriegelung des Adapters 11 im Kupplungsteil 25 dient. Auf der dem Mitnehmerkörper 14 zugekehrten Stirnfläche des Halterings 43 sind zwei axial vorstehende Radialanschläge 48 (Fig. 2) diametral angeordnet, die mit zwei an der Stirnfläche des Mitnehmerkörpers 14 angeordneten Gegenanschlägen 49 in der Weise zusammenwirken, dass am Ende des Einschraubvorgangs des Gewindeabschnitts 18 in das zentrale Gewindeloch 20 der Lochsäge 10 die Radialanschläge 48 und Gegenanschläge 49 in Eingriff miteinander kommen, wenn der Sechskant auf dem Ringabschnitt 46 des Halterings 43 mit dem Außensechskant 24 des Mitnehmerkörpers 14 fluchtet. Das Federelement 44 sorgt dafür, dass diese Ausrichtung von Haltering 43 und Mitnehmerkörper 14 bei der Montage aufrechterhalten bleibt.

Im Ausführungsbeispiel der Fig. 1 bis 3 wird der zur Begrenzung des Verschiebewegs des Gewindedorns 13 dienende andere Anschlag 22 am Gewindedorn 13, der auch das Herausfallen des Gewindedorns 13 aus dem Mitnehmer 12 verhindert, von dem Haltering 43 und der mit diesem zusammenwirkende andere Gegenanschlag 23 von dem Mimehmerkörper 14 gebildet.

Zur Montage von Lochsäge 10 und Adapter 11 wird der komplettierte Adapter 11, wie er in Fig. 1 im Zusammenbau zu sehen ist, so an die Lochsäge 10 angesetzt, dass die Mitnahmezapfen 16 in die Aufnahmelöcher 21 in der Lochsäge 10 eintauchen. Dann wird der Gewindeabschnitt 18 des Gewindedorns 13 in das Gewindeloch 20 der Lochsäge 10 eingeschraubt, wozu der Gewindedorn 13 über den gerändelten Ringabschnitt 45 manuell gedreht wird. Mit zunehmenden Einschrauben des Gewindeabschnitts 18 wird das Federelement 44 gespannt, und am Ende der Einschraubbewegung legen sich die Radialanschläge 48 am Haltering 43 gegen die Gegenanschläge 49 am Mitnehmerkörper 14 an, wobei zugleich der Sechskant-Ringabschnitt 46 des Halterings 43 mit dem Außensechskant 24 des Mitnehmerkörpers 14 fluchtet. Nunmehr wird das Bohrerverbindungsstück 30 mit eingesetztem Pilotbohrer 34 in den Gewindedorn 13 eingeführt und der Adapter 11 in die Antriebshülse 26 eingeschoben. Die Verschiebehülse 28 wird dabei manuell soweit nach links in Fig. 3 verschoben, bis die Ausnehmung 32 über der Rastkugel 33 liegt. Der Adapter 11 wird vollständig eingeschoben, bis die Rastkugel 33 in die Rastnut 47 im Haltering 43 einzufallen vermag. Wird nunmehr die Verschiebehülse 28 freigegeben, so nimmt sie unter der Wirkung der Druckfeder 29 wieder ihre in Fig. 3 gezeigte Verriegelungsstellung ein, in welcher die Rastkugel 33 radial unverschieblich in die Rastnut 47 hineinragt und den Adapter 11 axial unverschieblich in der Antriebshülse 26 verriegelt.

Bei dem in Fig. 4 und 5 dargestellten Adapter 11 zum direkten Einspannen in das Spannfutter einer Elektrohandbohrmaschine wird der Mitnahmeabschnitt 117 am Mitnehmerkörper 114 des Mitnehmers 112 von einem Einspanndorn 152 gebildet, der sich an dem vom Mimehmerflansch 115 abgekehrten Ende des Mimehmerkörpers 114 einstückig fortsetzt. Der Mimehmerkörper 114 weist eine radial durchgängige Ausnehmung 153 auf, die von dem hohlen Gewindedom 113 3 durchdrungen ist. Im Bereich der Ausnehmung 153 ist auf dem Gewindedorn 113 eine manuell greifbare Drehhilfe in Form eines Rändelrads 154 befestigt. Über dieses Rändelrad 154 kann der Gewindedorn 113 zum Einschrauben seines Gewindeabschnitts 118 in das Gewindeloch 20 der Lochsäge 10 gedreht werden. In den Gewindedorn 113 ist wiederum das Bohrerverbindungsstück 130 eingesetzt, das mit seinem Sechskantschaft 131 in ein entsprechendes Sackloch 155 im Einspanndorn 152 hineinragt und so in Drehrichtung formschlüssig mitgenommen wird. Das Bohrerverbindungsstück 130 weist wiederum eine Ausnehmung 132 mit Sechskantausführung der Innenwand zur Aufnahme des Sechskantschafts des Pilotbohrers auf, wie er in Fig. 3 dargestellt ist.

Der Gewindedorn 113 weist an seinem vom Gewindeabschnitt 118 abgekehrten Ende einen Endabschnitt 156 mit reduziertem lichten Durchmesser auf. Das zylinderförmige Bohrerverbindungsstück 130 besitzt einen im Durchmesser reduzierten Zylinderabschnitt 157 der durch den Abschnitt 156 des Gewindedorns 113 hindurchgeführt ist. Die an den Übergängen der Abschnitte 156 und 157 ausgebildeten Radialschultern bilden den anderen Anschlag 122 am Gewindedorn 113 und den mit diesem zusammenwirkenden Gegenanschlag 123 am Mitnehmer 112 zur Begrenzung des axialen Verschiebewegs des Gewindedorns 113 im Mitnehmer 112, die auch ein Herausfallen des Gewindedorns 113 aus dem Mitnehmer 112 verhindern. Der Zylinderabschnitt 157 ist in seiner axialen Länge sehr viel größer gemacht als der Abschnitt 156 am Gewindedorn 113, so dass die axiale Verschiebbarkeit des Gewindedorns 113 gewährleistet ist.

## Patentansprüche

1. Adapter zum Betreiben einer Lochsäge (10) an einer Antriebsmaschine, insbesondere Elektrohandbohrmaschine, mit einem Mitnehmer (12), der einen Mitnehmerkörper (14) mit einem daran ausgebildeten Mitnahmeabschnitt (17) zur Drehmomentaufnahme und einen sich daran einstückig fortsetzenden Mitnehmerflansch (15) mit einer vom Mitnehmerkörper (14) abgekehrten, eine Anlagefläche für die Lochsäge (10) bildenden Flanschfläche und mindestens einem radial zur Mitnehmerachse versetzten, über die Anlagefläche parallel zur Mitnehmerachse vorstehenden Mitnahmezapfen (16) zum formschlüssigen Eintauchen in mindestens ein in der Lochsäge (10) vorhandenes Aufnahmeloch (21) aufweist, und mit einem im Mitnehmer (12) einliegenden, mit diesem unlösbar verbundenen und in diesem drehbar und begrenzt axial verschieblich gehaltenen Gewindedorn (17), der einen am flanschseitigen Ende des Mitnehmers (12) über dieses vorstehenden Gewindeabschnitt (13) zum Einschrauben in ein in der Lochsäge (10) vorhandenes Gewindeloch (20) aufweist, **dadurch gekennzeichnet, dass** der Verschiebeweg des Gewindedorns (13) im Mitnehmer (12) durch axial beabstandete Anschläge (22) am Gewindedorn (13) und durch mit diesen zusammenwirkende, am Mitnehmer (12) angeordnete Gegenanschläge (23) begrenzt und mindestens so groß bemessen ist, dass das vom flanschseitigen Ende des Mitnehmers (12) abgekehrte Ende des Gewindeabschnitts (18) hinter das freie Stirnende des mindestens einen Mitnahmezapfens (16) zurückschiebbar ist, dass der Gewindedorn (13) mit einem vom Gewindeabschnitt (18) abgekehrten Endabschnitt (42) über den Mitnehmer (12) vorsteht und dass auf dem vorstehenden Endabschnitt (42) ein Haltering (43) befestigt, vorzugsweise aufgeschrumpft, ist, der einen mit einer Rändelung versehenen Ringabschnitt (45) aufweist und zugleich einen Anschlag zur Begrenzung des Verschiebewegs des Gewindedorns (13) bildet.

2. Adapter nach Anspruch 1, **dadurch gekennzeichnet, dass** der Mitnehmerkörper (14) einen den Mitnahmeabschnitt (17) bildenden Außensechskant (24) zum formschlüssigen Einsetzen in ein in die Antriebsmaschine einsetzbares Kupplungsteil (25) aufweist.

3. Adapter nach Anspruch 1 oder 2, **dadurch gekennzeichnet, dass** der Haltering (43) eine in die Ringaußenfläche eingearbeitete, vorzugsweise konkave, Rastnut (47) aufweist, die zum Eintauchen eines im Kupplungsteil (25) gehaltenen Verriegelungselements, vorzugsweise einer Rastkugel (38), ausgebildet ist.

4. Adapter nach Anspruch 3, **dadurch gekennzeichnet, dass** der Haltering (43) einen mit einem Sechskant versehenen Ringabschnitt (46) aufweist, der an den Außensechskant (24) des Mitnahmeabschnitts (17) am Mitnehmerkörper (14) angepasst ist.

5. Adapter nach Anspruch 4, **dadurch gekennzeichnet, dass** die Rastnut (47) zwischen den beiden Ringabschnitten (45, 46) angeordnet ist.

6. Adapter nach einem der Ansprüche 1 bis 5, **dadurch gekennzeichnet, dass** sich zwischen dem Haltering (43) und der diesem zugekehrten Stirnfläche des Mitnehmerkörpers (14) ein Federelement (44) mit axial gerichteter Federkraft, vorzugsweise ein Sprengring, abstützt.

7. Adapter nach Anspruch 6, **dadurch gekennzeichnet, dass** am Haltering (43) ein axial vorstehender Radialanschlag (48) und am Mitnehmer (12) ein von dessen Stirnfläche axial vorstehender Gegenanschlag (49) angeordnet ist und dass Radialanschlag (48) und Gegenanschlag (49) so ausgebildet sind, dass sie am Ende des Einschraubvorgangs des Gewindeabschnitts (18) in das lochsägenseitige Gewindeloch (20) bei miteinander fluchtenden Außensechskant (24) am Mitnehmerkörper (14) und Sechskant-Ringabschnitt (46) am Haltering (43) aneinanderstoßen.

8. Adapter zum Betreiben einer Lochsäge (10) an einer Antriebsmaschine, insbesondere Elektrohandbohrtnaschine, mit einem Mitnehmer (112), der einen Mitnehmerkörper (114) mit einem daran ausgebildeten Mitnahmeabschnitt (117) zur Drehmomentaufnahme und einen sich daran einstückig fortsetzenden Mitnehmerflansch (115) mit einer vom Mitnehmerkörper (114) abgekehrten, eine Anlagefläche für die Lochsäge (10) bildenden Flanschfläche und mindestens einem radial zur Mitnehmerachse versetzten, über die Anlagefläche parallel zur Mitnehmerachse vorstehenden Mitnahmezapfen (116) zum formschlüssigen Eintauchen in mindestens ein in der Lochsäge (10) vorhandenes Aufnahmeloch (21) aufweist, und mit einem im Mitnehmer (112) einliegenden, mit diesem unlösbar verbundenen und in diesem drehbar und begrenzt axial verschieblich gehaltenen Gewindedorn (113), der einen am flanschseitigen Ende des Mitnehmers (112) über dieses vorstehenden Gewindeabschnitt (118) zum Einschrauben in ein in der Lochsäge (10) vorhandenes Gewindeloch (20)aufweist, **dadurch gekennzeichnet, dass** der Verschiebeweg des Gewindedorns (113) im Mitnehmer (112) durch axial beabstandete Anschläge (122) am Gewindedorn (113) und durch mit diesen zusammenwirkende, am Mitnehmer (112) angeordnete Gegenanschläge (123) begrenzt und mindestens so groß bemessen ist, dass das vom flanschseitigen Ende des Mitnehmers (112) abgekehrte Ende des Gewindeabschnitts (118) hinter das freie Stirnende des mindestens einen Mitnahmezapfens (116) zurückschiebbar ist, dass ein den Mitnahmeabschnitt (117) bildender Einspanndorn (152) sich am Mitnehmerkörper (114) an dessen vom Mitnehmerflansch (115) abgekehrten Ende einstückig fortsetzt, dass der Mitnehmerkörper (114) eine radial durchgängige Ausnehmung (153) aufweist, die von dem Gewindedorn (113) axial durchdrungen ist, und dass auf dem Gewindedorn (113) im Bereich der Ausnehmung (153) eine greifbare Drehhilfe, vorzugsweise ein Rändekad (154), befestigt ist.

9. Adapter nach einem der Ansprüche 1 bis 8, **dadurch gekennzeichnet, dass** am Mitnehmerflansch (15; 115) zwei Mitnahmezapfen (16; 116) diametral angeordnet sind, die über die Anlagefläche parallel zur Mitnehmerachse vorstehen, und die Mitnahmezapfen (16; 116) in Flanschlöcher (19; 119) eingesetzt und darin vorzugsweise durch Verpressen gehalten sind.

10. Adapter nach einem der Ansprüche 1 bis 8, **dadurch gekennzeichnet, dass** am Mitnehmerflansch (15; 115) zwei Mitnahmezapfen (16; 116) diametral angeordnet sind, die über die Anlagefläche parallel zur Mitnehmerachse vorstehen, und die Mitnahmezapfen (16; 116) einstückig mit dem Mitnehmerflansch (15; 115) ausgeführt sind.

11. Adapter nach einem der Ansprüche 1 bis 10, **dadurch gekennzeichnet, dass** der Gewindedorn (13; 113) hohlzylindrisch ausgebildet ist und im Gewindedorn (13; 113) ein Bohrerverbindungsstück (30; 130) zum Einstecken eines Pilotbohrer (34) angeordnet ist.

## Claims

1. Adapter for operating a hole saw (10) on a driving machine, in particular a portable electric drill, comprising a driver (12) which has a driver body (14) having a driving section (17) formed thereon for torque pickup and a driver flange (15) extending integrally thereon and having a flange surface facing away from the driver body (14) and forming a bearing surface for the hole saw (10) and at least one driving pin (16) which is offset radially from the driver axis, projects beyond the bearing surface parallel to the driver axis and is intended for plunging in a positive-locking manner into at least one locating hole (21) in the hole saw (10), and comprising a threaded mandrel (13) which rests in the driver (12), is connected thereto in a non-detachable manner and is held therein in a rotatable manner and so as to be axially displaceable to a limited extent and has a threaded section (18) for screwing into a tapped hole (20) in the hole saw (10), said threaded section (18) projecting beyond the driver (12) at the flange-side end thereof, **characterized in that** the displacement of the threaded mandrel (13) in the driver (12) is limited by axially spaced-apart stops (22) on the threaded mandrel (13) and by counter-stops (23) interacting with the latter and arranged on the driver (12) and is at least large enough to enable that end of the threaded section (18) which faces away from the flange-side end of the driver (12) to be pushed back behind the free end face of the at least one driving pin (16), **in that** the threaded mandrel (13) projects beyond the driver (12) with an end section (42) which faces away from the threaded section (18), and **in that** a retaining ring (43) is fastened to the projecting end section (42), preferably by a shrink fit, which retaining ring (43) has a knurled annular section (45) and at the same time forms a stop for limiting the displacement of the threaded mandrel (13).

2. Adapter according to Claim 1, **characterized in that** the driver body (14) has an external hexagon (24) which forms the driving section (17) and is intended for inserting in a positive-locking manner into a coupling part (25) which can be inserted into the driving machine.

3. Adapter according to Claim 1 or 2, **characterized in that** the retaining ring (43) has a preferably concave latching groove (47) which is made in the ring outer surface and into which a locking element, preferably a latching ball (38), held in the coupling part (25) can plunge.

4. Adapter according to Claim 3, **characterized in that** the retaining ring (43) has a hexagonal annular section (46) which is adapted to the external hexagon (24) of the driving section (17) on the driver body (14).

5. Adapter according to Claim 4, **characterized in that** the latching groove (47) is arranged between the two annular sections (45, 46).

6. Adapter according to one of Claims 1 to 5, **characterized in that** a spring element (44) with axially directed spring force, preferably a snap ring, is supported between the retaining ring (43) and that end face of the driver body (14) which faces said retaining ring (43).

7. Adapter according to Claim 6, **characterized in that** an axially projecting radial stop (48) is arranged on the retaining ring (43) and a counter-stop (49) is arranged on the driver (12) and projects axially from the end face thereof, and **in that** the radial stop (48) and the counter-stop (49) are designed in such a way that they abut one another at the end of the process for screwing the threaded section (18) into the tapped hole (20) in the hole saw when the external hexagon (24) on the driver body (14) and the hexagonal annular section (46) on the retaining ring (43) are in alignment.

8. Adapter for operating a hole saw (10) on a driving machine, in particular a portable electric drill, comprising a driver (112) which has a driver body (114) having a driving section (117) formed thereon for torque pickup and a driver flange (115) extending integrally thereon and having a flange surface facing away from the driver body (114) and forming a bearing surface for the hole saw (10) and at least one driving pin (116) which is offset radially from the driver axis, projects beyond the bearing surface parallel to the driver axis and is intended for plunging in a positive-locking manner into at least one locating hole (21) in the hole saw (10), and comprising a threaded mandrel (113) which rests in the driver (112), is connected thereto in a non-detachable manner and is held therein in a rotatable manner and so as to be axially displaceable to a limited extent and has a threaded section (118) for screwing into a tapped hole (20) in the hole saw (10), said threaded section (118) projecting beyond the driver (112) at the flange-side end thereof, **characterized in that** the displacement of the threaded mandrel (113) in the driver (112) is limited by axially spaced-apart stops (122) on the threaded mandrel (113) and by counter-stops (123) interacting with the latter and arranged on the driver (112) and is at least large enough to enable that end of the threaded section (118) which faces away from the flange-side end of the driver (112) to be pushed back behind the free end face of the at least one driving pin (116), **in that** a clamping mandrel (152) forming the driving section (117) extends integrally on the driver body (114) at the end thereof which faces away from the driver flange (115), **in that** the driver body (114) has a radial through-aperture (153), through which the threaded mandrel (113) passes axially, and **in that** an accessible turning aid, preferably a knurled wheel (154), is fastened to the threaded mandrel (113) in the region of the aperture (153).

9. Adapter according to one of Claims 1 to 8, **characterized in that** two driving pins (16; 116), which project beyond the bearing surface parallel to the driver axis, are diametrically arranged on the driver flange (15; 115), and the driving pins (16; 116) are inserted into flange holes (19; 119) and are held therein, preferably by grouting.

10. Adapter according to one of Claims 1 to 8, **characterized in that** two driving pins (16; 116), which project beyond the bearing surface parallel to the driver axis, are diametrically arranged on the driver flange (15; 115), and the driving pins (16; 116) are integral with the driver flange (15; 115).

11. Adapter according to one of Claims 1 to 10, **characterized in that** the threaded mandrel (13; 113) is of hollow-cylindrical design and a drill-bit connecting piece (30; 130) for inserting a pilot drill bit (34) is arranged in the threaded mandrel (13; 113).

## Revendications

1. Adaptateur pour faire fonctionner une scie-cloche (10) sur une machine d'entraînement, en particulier une perceuse à main électrique, comprenant un entraîneur (12) qui présente un corps d'entraîneur (14) avec une portion d'entraînement (17) réalisée sur celui-ci, pour recevoir le couple, et une bride d'entraîneur (15) s'y raccordant d'une seule pièce, avec une surface de bride opposée au corps d'entraîneur (14), formant une surface d'appui pour la scie-cloche (10), et avec au moins un tourillon d'entraînement (16) décalé radialement par rapport à l'axe de l'entraîneur, faisant saillie au-delà de la surface d'appui parallèlement à l'axe de l'entraîneur, prévu pour s'enfoncer par engagement par correspondance géométrique dans au moins un trou de réception (21) prévu dans la scie-cloche (10), et comprenant un mandrin fileté (13) s'insérant dans l'entraîneur (12), connecté de manière permanente à celui-ci et maintenu rotatif et déplaçable axialement de manière limitée dans celui-ci, qui présente, sur une extrémité de l'entraîneur (12) du côté de la bride, une portion filetée (18) faisant saillie au-delà de celui-ci, prévue pour se visser dans un trou fileté (20) prévu dans la scie-cloche (10), **caractérisé en ce que** la course de déplacement du mandrin fileté (13) dans l'entraîneur (12) est limitée par des butées (22) espacées axialement sur le mandrin fileté (13) et par des contrebutées (23) coopérant avec celles-ci et disposées sur l'entraîneur (12), et est dimensionnée au moins à une dimension telle que l'extrémité de la portion filetée (18) opposée à l'extrémité de l'entraîneur (12) du côté de la bride puisse être ramenée derrière l'extrémité frontale libre de l'au moins un tourillon d'entraînement (16), **en ce que** le mandrin fileté (13) fait saillie avec une portion d'extrémité (42) opposée à la portion filetée (18) au-delà de l'entraîneur (12), et **en ce qu'**une bague de retenue (43) est fixée, de préférence par frettage, sur la portion d'extrémité saillante (42), laquelle bague de retenue présente une portion annulaire (45) pourvue d'un moletage et forme en même temps une butée pour limiter la course de déplacement du mandrin fileté (13).

2. Adaptateur selon la revendication 1, **caractérisé en ce que** le corps d'entraîneur (14) présente un profil à six pans extérieur (24) formant la portion d'entraînement (17), pour l'insertion par engagement par correspondance géométrique dans une partie d'accouplement (25) pouvant être insérée dans la machine d'entraînement.

3. Adaptateur selon la revendication 1 ou 2, **caractérisé en ce que** la bague de retenue (43) présente une rainure d'encliquetage (47), de préférence concave, pratiquée dans la surface extérieure annulaire, qui est réalisée pour recevoir un élément de verrouillage maintenu dans la partie d'accouplement (25), de préférence une bille d'encliquetage (38).

4. Adaptateur selon la revendication 3, **caractérisé en ce que** la bague de retenue (43) présente une portion annulaire (46) pourvue d'un profil à six pans, qui est adapté au profil à six pans extérieur (24) de la portion d'entraînement (17) sur le corps d'entraîneur (14).

5. Adaptateur selon la revendication 4, **caractérisé en ce que** la rainure d'encliquetage (47) est disposée entre les deux portions annulaires (45, 46).

6. Adaptateur selon l'une quelconque des revendications 1 à 5, **caractérisé en ce qu'**un élément de ressort (44) avec une force de ressort orientée radialement, de préférence un jonc, s'appuie entre la bague de retenue (43) et la surface frontale du corps d'entraîneur (14) tournée vers celle-ci.

7. Adaptateur selon la revendication 6, **caractérisé en ce qu'**une butée radiale (48) saillant axialement est disposée sur la bague de retenue (43) et une contrebutée (49) saillant axialement depuis la surface frontale de l'entraîneur (12) est disposée sur celui-ci, et **en ce que** la butée radiale (48) et la contrebutée (49) sont réalisées de telle sorte qu'elles butent l'une contre l'autre à la fin de l'opération de vissage de la portion filetée (18) dans le trou fileté (20) du côté de la scie-cloche lorsque le profil à six pans extérieur (24) sur le corps d'entraîneur (14) et la portion annulaire à six pans (46) sur la bague de retenue (43) sont alignés l'un avec l'autre.

8. Adaptateur pour faire fonctionner une scie-cloche (10) sur une machine d'entraînement, en particulier une perceuse à main électrique, comprenant un entraîneur (112) qui présente un corps d'entraîneur (114) avec une portion d'entraînement (117) réalisée sur celui-ci, pour recevoir le couple, et une bride d'entraîneur (115) s'y raccordant d'une seule pièce, avec une surface de bride opposée au corps d'entraîneur (114), formant une surface d'appui pour la scie-cloche (10), et avec au moins un tourillon d'entraînement (116) décalé radialement par rapport à l'axe de l'entraîneur, faisant saillie au-delà de la surface d'appui parallèlement à l'axe de l'entraîneur, prévu pour s'enfoncer par engagement par correspondance géométrique dans au moins un trou de réception (21) prévu dans la scie-cloche (10), et comprenant un mandrin fileté (113) s'insérant dans l'entraîneur (112), connecté de manière permanente à celui-ci et maintenu rotatif et déplaçable axialement de manière limitée dans celui-ci, qui présente, sur une extrémité de l'entraîneur (112) du côté de la bride, une portion filetée (118) faisant saillie au-delà de celui-ci, prévue pour être vissée dans un trou fileté (20) prévu dans la scie-cloche (10), **caractérisé en ce que** la course de déplacement du mandrin fileté (113) dans l'entraîneur (112) est limitée par des butées (122) espacées axialement sur le mandrin fileté (113) et par des contrebutées (123) coopérant avec celles-ci et disposées sur l'entraîneur (112), et est dimensionnée au moins à une dimension telle que l'extrémité de la portion filetée (118) opposée à l'extrémité de l'entraîneur (112) du côté de la bride puisse être ramenée derrière l'extrémité frontale libre de l'au moins un tourillon d'entraînement (116), **en ce qu'**un mandrin de serrage (152) formant la portion d'entraînement (117) se raccorde d'une seule pièce au corps d'entraîneur (114) à son extrémité opposée à la bride d'entraîneur (115), **en ce que** le corps d'entraîneur (114) présente un évidement (153) traversant radialement, qui est traversé axialement par le mandrin fileté (113), et **en ce qu'**un auxiliaire de rotation pouvant être saisi, de préférence une molette (154), est fixé sur le mandrin fileté (113) dans la région de l'évidement (153).

9. Adaptateur selon l'une quelconque des revendications 1 à 8, **caractérisé en ce que** sur la bride d'entraîneur (15 ; 115) sont disposés diamétralement deux tourillons d'entraînement (16 ; 116) qui font saillie au-delà de la surface d'appui parallèlement à l'axe de l'entraîneur, et les tourillons d'entraînement (16 ; 116) sont insérés dans des trous de bride (19 ; 119) et y sont maintenus de préférence par pressage.

10. Adaptateur selon l'une quelconque des revendications 1 à 8, **caractérisé en ce que** sur la bride d'entraîneur (15 ; 115) sont disposés diamétralement deux tourillons d'entraînement (16 ; 116) qui font saillie au-delà de la surface d'appui parallèlement à l'axe de l'entraîneur, et les tourillons d'entraînement (16 ; 116) sont réalisés d'une seule pièce avec la bride d'entraîneur (15 ; 115).

11. Adaptateur selon l'une quelconque des revendications 1 à 10, **caractérisé en ce que** le mandrin fileté (13 ; 113) est réalisé sous forme cylindrique creuse et une pièce de raccord de foret (30 ; 130) est disposée dans le mandrin fileté (13 ; 113) pour l'insertion d'un foret pilote (34).
